# EUROPEAN PATENT APPLICATION

(11) **EP 4 733 907 A1**
(43) Date of publication of application: **29.04.2026**
(21) Application number: 24825204.1
(22) Date of filing: 17.06.2024
(51) Int. Cl.: G06F 3/0481

(54) **MEDIA CONTENT PRESENTATION METHOD AND APPARATUS, AND DEVICE AND STORAGE MEDIUM**

(30) Priority: 20.06.2023 CN 202310736312
(71) Applicant: Beijing Zitiao Network Technology Co., Ltd., Beijing 100190 (CN)
(72) Inventor: TANG, Bo, Beijing 100028 (CN); LU, Jing, Beijing 100028 (CN); ZHAI, Ying, Beijing 100028 (CN); XU, Jiannan, Beijing 100028 (CN)
(74) Representative: Grünecker Patent- und Rechtsanwälte PartG mbB
(86) International application number: PCT/CN2024/099586
(87) International publication number: WO 2024/260308

(57) **Abstract**

Provided in the present disclosure are a media content presentation method and apparatus, and a device and a storage medium. The method comprises: presenting the current target media content in a target presentation page, wherein the current target media content is posted by a preset user in a selected state, there is a preset association relationship between the preset user and the current user, and the target media content comprises media works, which have not been presented to the current user before the target presentation page is entered; and displaying a first preset user identifier set in a first preset area of the target presentation page, wherein the first preset user identifier set comprises an unselected-state user identifier of at least one preset user in an unselected state, and the unselected-state user identifier is used for triggering a change of the preset user in the selected state at present.

## Description

The present application claims priority to Chinese Patent Application No. 202310736312.8 filed on June 20, 2023, and the contents posted by the above Chinese Patent Application are incorporated herein by reference in its entirety as a part of the present application.

### TECHNICAL FIELD

Embodiments of the present disclosure relate to a method and an apparatus of media content displaying, a device, and a storage medium.

### BACKGROUND

With the continuous development of Internet technology, users can view various kinds of multimedia content through the Internet platform, and different users can share their works with each other in the form of posting media content, such as videos or picture.

### SUMMARY

Embodiments of the present disclosure provide a method and apparatus of media content displaying, a storage medium, and a device, which can optimize an existing solution of media content displaying.

According to a first aspect, embodiments of the present disclosure provide a method of media content displaying, including:
displaying a current target media content in a target display page, where the current target media content is posted by a preset user in a selected state, the preset user in the selected state includes a preset user having a user identifier in a selected state, the preset user in the selected state is contained in a preset user set, preset users in the preset user set have a preset association relationship with a current user, and target media contents includes a media work posted by the preset user and having not been displayed to the current user before entering the target display page; and
displaying a first preset user identifier set in a first preset area of the target display page, where the first preset user identifier set includes at least one unselected state user identifier of a preset user in an unselected state in the preset user set, the unselected state user identifier is configured to trigger a change of the preset user currently in the selected state, and the preset user in the unselected state includes a preset user having a user identifier in the unselected state.

In a second aspect, an embodiment of the present disclosure further provides an apparatus of media content displaying, including:
a media content display module, configured to display a current target media content in a target display page, where the current target media content is posted by a preset user in a selected state, the preset user in the selected state includes a preset user having a user identifier in a selected state, the preset user in the selected state is contained in a preset user set, preset users in the preset user set have a preset association relationship with a current user, and target media contents includes a media work posted by the preset user and having not been displayed to the current user before entering the target display page; and
a user identifier display module, configured to display a first preset user identifier set in a first preset area of the target display page, where the first preset user identifier set includes at least one unselected state user identifier of a preset user in an unselected state in the preset user set, the unselected state user identifier is configured to trigger a change of the preset user currently in the selected state, and the preset user in the unselected state includes a preset user having a user identifier in the unselected state.

In a third aspect, an embodiment of the present disclosure further provides an electronic device, and the electronic device includes:
one or more processors,
a storage apparatus, configured to store one or more programs,
when the one or more programs are executed by the one or more processors, the one or more processors implements the content of media content displaying provided by an embodiment of the present disclosure.

In a fourth aspect, an embodiment of the present disclosure further provides a storage medium including computer-executable instructions, configured to, when executed by a computer processor, perform the method of media content displaying provided by the embodiment of the present disclosure.

### BRIEF DESCRIPTION OF DRAWINGS

The above and other features, advantages, and aspects of various embodiments of the present disclosure will become more apparent when taken in conjunction with the accompanying drawings and referring to the following Detailed Description. Throughout the drawings, the same or similar reference numerals denote the same or similar elements. It should be understood that the drawings are schematic and components and elements are not necessarily drawn to scale.
Fig. 1 is a schematic flow diagram of a method of media content displaying according to an embodiment of the present disclosure;
Fig. 2 is a schematic diagram of an interface according to an embodiment of the present disclosure;
Fig. 3 is a schematic diagram of another interface according to an embodiment of the present disclosure;
Fig. 4 is a schematic diagram of another interface according to an embodiment of the present disclosure;
Fig. 5 is a schematic flow diagram of a method of media content displaying according to an embodiment of the present disclosure;
Fig. 6 is a schematic diagram of interface interaction according to an embodiment of the present disclosure;
Fig. 7 is a schematic structural diagram of an apparatus of media content displaying according to an embodiment of the present disclosure; and
Fig. 8 is a schematic structural diagram of an electronic device according to an embodiment of the present disclosure.

### DETAILED DESCRIPTION

Embodiments of the present disclosure will be described in more detail below with reference to the accompanying drawings. While some embodiments of the present disclosure are shown in the drawings, it should be understood that the present disclosure may be embodied in various forms and should not be construed as limited to the embodiments set forth herein. On the contrary, the embodiments are provided for a more thorough and complete understanding of the present disclosure. It should be understood that the drawings and embodiments of the present disclosure are for illustrative purposes only, and are not intended to limit the scope of protection of the present disclosure.

It should be understood that the various steps described in the method embodiments of the present disclosure may be performed in different orders, and/or in parallel. Furthermore, method embodiments may include additional steps and/or omit performing the illustrated steps. The scope of the present disclosure is not limited in this respect.

As used herein, the term "including" and variations thereof are open-encompassing, i.e., "including but not limited to". The term "based on" is "based at least in part on". The term "one embodiment" means "at least one embodiment"; The term "another embodiment" means "at least one additional embodiment"; The term "some embodiments" means "at least some embodiments". Relevant definitions of other terms will be given in the following description.

It should be noted that the concepts such as "first" and "second" mentioned in the present disclosure are only used to distinguish different devices, modules, or units, and are not used to limit the order or interdependence of functions performed by these devices, modules, or units.

It should be noted that the modifications of "one" and "a plurality" mentioned in the present disclosure are schematic and not limiting, and should be understood by those skilled in the art as "one or more" unless otherwise explicitly indicated in the context.

The names of messages or information interacted between multiple apparatuses in embodiments of the present disclosure are for illustrative purposes only, and are not intended to limit the scope of these messages or information.

It can be understood that before using the technical solutions disclosed in each embodiment of the present disclosure, users should be informed of the types, usage scope, usage scenarios, etc. of the personal information involved in the present disclosure in an appropriate manner in accordance with relevant laws and regulations, and authorization from the users should be obtained.

For example, in response to receiving an active request from the user, prompt information is sent to the user to explicitly prompt the user that the operation he/she requests to perform will require the acquisition and use of the user's personal information. Accordingly, the user can autonomously select whether or not to provide personal information to software or hardware such as electronic device, application, a server, or storage medium that performs the operation of the technical solution of the present disclosure according to prompt information.

As an optional but non-limiting implementation, in response to receiving an active request from the user, the manner of sending prompt information to the user may be, for example, the manner of pop-up window, and the pop-up window may be presented in text in the prompt information. In addition, the pop-up window can also carry an optional control for users to choose "agree" or "disagree" to provide personal information to electronic device.

It is to be understood that the above-described procedures of notifying and obtaining user authorization are merely illustrative and do not limit the implementation forms of the present disclosure, and other methods satisfying relevant laws and regulations can also be applied to the implementation forms of the present disclosure.

It can be understood that the data involved in this technical solution (including but not limited to the data itself, the acquisition or use of data) should comply with the requirements of corresponding laws, regulations and relevant provisions.

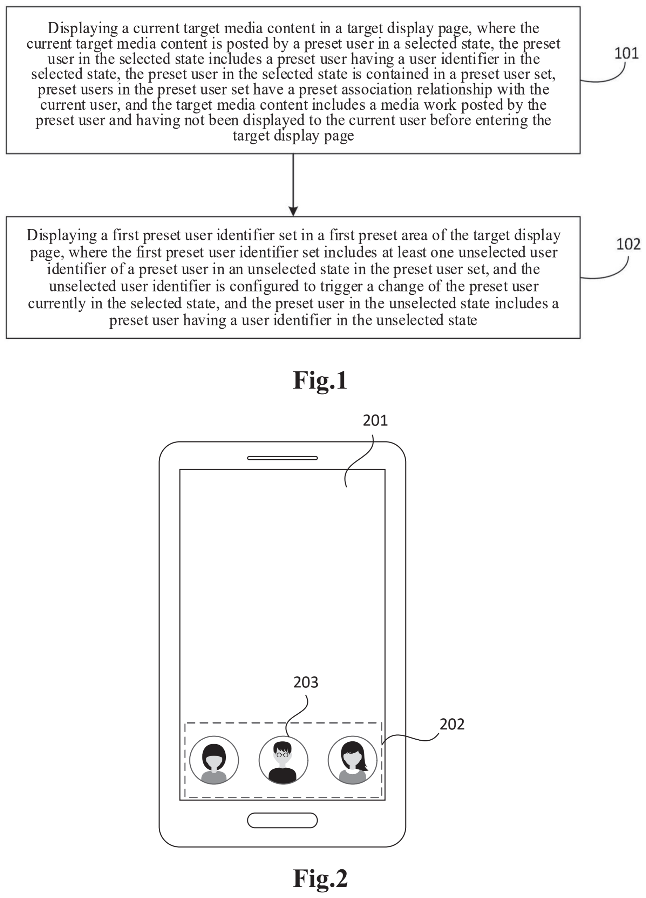

Fig. 1 is a schematic flow diagram of a method of media content displaying according to an embodiment of the present disclosure. The embodiment of the present disclosure is applicable to the case of media content displaying, and the method may be executed by an apparatus of media content displaying, which may be implemented in the form of software and/or hardware, or optionally, by an electronic device, which may be a mobile terminal such as a mobile phone, a smart watch, a tablet computer, and a personal digital assistant, or may be a device such as a Personal Computer (PC) or a server.

As shown in Fig. 1, the method includes:
Step 101, displaying a current target media content in a target display page, where the current target media content is posted by a preset user in a selected state, the preset user in the selected state includes a preset user having a user identifier in the selected state, preset users in the selected state is contained in a preset user set, preset users in the preset user set have a preset association relationship with the current user, and the target media content includes a media work posted by the preset user and having not been displayed to the current user before entering the target display page.

Exemplarily, the user identifier may include an avatar, a nickname, and the like of the user.

In an embodiment of the present disclosure, the target display page may be a page in a preset application program, and the preset application program may provide a function of media content displaying, and may be installed in the electronic device. Target display page is configured to display target media content.

Exemplarily, the target media content includes a media work posted by the preset user and having not been displayed to the current user before entering the target display page. For example, before the current user selects to enter the target display page, a media work posted by the preset user that has not performed a viewing operation can be understood as a newly posted work of the preset user as of the time when the current user enters the target display page. The media work may include a video work, a graphic work, an audio work, a text work, etc.

Exemplarily, the current user may be understood as a user currently viewing the target display page. The preset association relationship may include, for example, a follow relationship, a followed relationship, a mutual follow relationship, having been subject to a preset interactive operation (such as a like operation, or the like), or locating in the same user group, etc., and a user who satisfies the preset association relationship with the current user may be recorded as a preset user, and the preset user is contained in the preset user set. The current target media content may be understood as the target media content currently displayed in the target display page. The current target media content may include one or more, and the current target media content is generally posted by the same preset user, and the preset user is in the selected state, and the preset users other than the preset user in the selected state in the preset user set may be recorded as the preset user in the unselected state, that is, the target media work posted by the preset user in the unselected state is not displayed in the target display page.

Optionally, before displaying the current target media content in the target display page, the method further includes: displaying a preset media content and a page entry of the target display page in the preset display page; in response to a trigger operation on the page entry, entering the target display page. The preset display page is configured to display a media content stream of a set user satisfying the preset association relationship (which may be different from the preset association relationship) with the current user.

Step 102: displaying a first preset user identifier set in a first preset area of the target display page, where the first preset user identifier set includes at least on unselected state user identifier of a preset user in an unselected state in the preset user set, and the unselected state user identifier is configured to trigger a change of the preset user currently in the selected state, and the preset user in the unselected state includes a preset user having a user identifier in the unselected state.

In an embodiment of the present disclosure, the specific position, size, and the like of the first preset area are not limited, and it may be provided at the bottom, top, left, right, or the like of the target display page, for example. The first preset user identifier set may be understood as a set of user identifiers currently displayed in the first preset area, and the displayed user identifier includes at least one unselected state user identifier of a preset user in the unselected state. The unselected state user identifier may be understood as a user identifier indicating that the corresponding preset user is currently in the unselected state. The user identifier may include an avatar, a name or a nickname, etc. The display mode of the unselected state user identifier of the first preset user identifier set in the first preset area is not limited, and may be a single-row sequence form, a matrix form, or the like.

Exemplarily, the unselected state user identifier is configured to trigger the change of the preset user currently in the selected state. When the user triggers a certain unselected state user identifier, the user, to which the triggered unselected state user identifier belongs, may be set as a new preset user in the selected state. Since the current media content displayed in the target display page is posted by the preset user in the selected state, the current target media content may be updated by triggering the unselected state user identifier, that is, updated to the target media content posted by the new preset user in the selected state.

Fig. 2 is a schematic diagram of an interface provided by an embodiment of the present disclosure. As shown in Fig. 2, the current target media content is displayed in the target display page 201, a first preset user identifier set is displayed in the first preset area 202 of the target display page 201, and the first preset user identifier set includes an unselected state user identifier 203. In the figure, three user avatars are illustrated as an example.

In the method of media content displaying according to the embodiment of the present disclosure a current target media content is displayed in a target display page, where the current target media content is posted by a preset user in a selected state, the preset user in the selected state is contained in a preset user set, preset users in the preset user set have a preset association relationship with the current user, the target media content includes a media work posted by the preset user having not been displayed to the current user before entering the target display page, a first preset display page set is displayed in a first preset area of the target user identifier, and the first preset user identifier set includes at least one unselected state user identifier of a preset user in the unselected state, and the unselected state user identifier is configured to trigger a change of the preset user currently in the selected state. By adopting the above technical solution, the media work posted by a preset user associated with the current user that have not been displayed to the current user are displayed in the target display page, and user identifiers of other preset users are displayed, so that the user may change the author of the displayed media work by triggering the user identifier, and thus may conveniently view the newly posted works of each preset user, thereby improving user experience.

In some embodiments, after displaying the first preset user identifier set in the first preset area of the target display page, the method further includes, in response to a first preset gesture operation on the first preset area, updating at least one unselected state user identifier contained in the first preset user identifier set. Thus, the user may be allowed to select a switchable preset user more freely.

Exemplarily, the first preset gesture operation may include, for example, a swipe gesture operation, a long-press gesture operation, or the like. As shown in Fig. 2, assuming that the three avatars currently displayed in the first preset area 202 are the avatars of the first three preset users in the preset user set, if the current user inputs a left swipe operation in the first preset area 202, the avatar of the first preset user may exit from the left side and the avatar of the fourth preset user enters from the right side. For another example, if the current user inputs a long-press operation in the first preset area 202, the three avatars may be replaced with the avatar of the fourth preset user to the avatar of the sixth preset user.

In some embodiments, after displaying the first preset user identifier set in the first preset area of the target display page, the method further includes: in response to a trigger operation for a target unselected state user identifier in the first preset user identifier set, setting a target preset user, to which the target unselected state user identifier belongs, as a new preset user in the selected state; and displaying the target media content posted by the target preset user in the target display page. Accordingly, after receiving the trigger operation of the current user for a certain unselected state user identifier, the preset user in the selected state may be quickly changed to further implement updating of the current target media content.

Exemplarily, the trigger operation may be a click operation, for example. The target media content posted by the target preset user may be displayed in the target display page, and specifically, the current target media content currently displayed may be changed to a target media content posted by the target preset user in the target display page, for example, changed to a first target media content posted by the target preset user. It should be noted that after entering the target display page, the count of target media contents posted by each preset user may be fixed. If a certain target media content has been displayed in the target display page, the target media content may be recorded as the read target media content. If a target media content has not been displayed in the target display page, the target media content may be recorded as unread target media content. The target media contents posted by each preset user may be sequentially displayed in a preset display order, and the preset display order may be determined according to, for example, the posting time. Displaying the target media content posted by the target preset user specifically may be, when an unread target media content posted by the target preset user is present, the first unread target media content posted by the target preset user is displayed; when the unread target media content posted by the target preset user is not present, the first target media content posted by the target preset user is displayed, or the target media content of the target preset user last displayed in the target display page is displayed, or a target media content next to the target media content of the target preset user last displayed in the target display page is displayed.

In some embodiments, the method further includes: displaying a count of unread target media contents corresponding to a preset user, to which the unselected state user identifier belongs, in a first associated display position of the unselected state user identifier. Accordingly, it may help the current user to further intuitively understand the count of unread target media contents posted by each preset user in the unselected state. The first associated display position is not specifically limited, and the area in which the first associated display position is located may intersect with the display area of the unselected state user identifier, such as the upper right corner area of the unselected state user identifier.

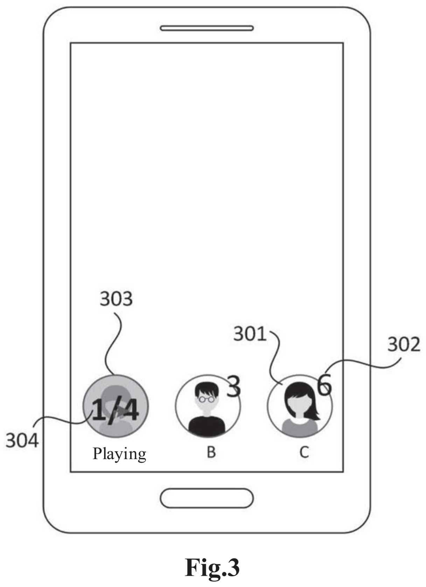

Fig. 3 is a schematic diagram of another interface provided by the embodiment of the present disclosure. As shown in Fig. 3, the count 302 of unread target media contents of the preset user C, such as the count 6 in Fig. 3, is displayed at the upper right corner of the unselected state user identifier 301 of the preset user C in the unselected state.

In some embodiments, the first preset user identifier set further includes a selected state user identifier of a preset user in a selected state. Accordingly, the current user may be helped to intuitively understand the preset user currently in the selected state.

The display style of selected state user identifier is different from the display style of unselected state user identifier. The difference may be embodied in, for example, the content of the user identifier, whether the count of unread target media contents is displayed in association, whether associated information is displayed, the background color, the transparency, etc. As shown in Fig. 3, the selected state user identifier 303 contains the avatar and the associated information of the word "playing", the count of unread target media contents is not displayed, the background color is gray, and the avatar is translucent; the unselected state user identifier 301 contains the avatar and the user name C, the count of unread target media contents is displayed in association, the background color is white, and the avatar is opaque.

In some embodiments, the method further includes displaying a target count of the target media contents corresponding to a preset user, to which the selected state user identifier belongs, and/or a playing number of the current target media content in the target count of the target media contents in a second associated display position of the selected state user identifier. Accordingly, the current user may be helped to intuitively understand the total count of target media contents posted by the preset user currently in the selected state and/or the playing order of the current target media contents, to further obtain the play progress corresponding to the preset user.

Exemplarily, the second associated display position may be located at the center of the selected state user identifier or below the selected state user identifier. As shown in Fig. 3, "1/4" is displayed at the center position 304 of the selected state user identifier 303, where 4 indicates the count of targets, that is, four target media contents posted by the preset user are present, and 1 indicates the play order, that is, the first target media content among the four target media contents is currently being played.

In some embodiments, the unselected state user identifier is displayed in association with a count of unread target media contents corresponding to the preset user to which the unselected state user identifier belongs; where, before the target preset user to which the target unselected state user identifier belongs is set as a new preset user in the selected state, the method further includes changing the preset user currently in the selected state to the preset user in the unselected state, and updating the count of unread target media contents corresponding to the changed preset user. Accordingly, the count of unread target media contents may be updated in time.

As shown in Fig. 3, assuming that the selected state user identifier 303 belongs to the preset user A, after entering the target display page, before the preset user A becomes the preset user in the selected state, the count of unread target media contents is 4, and after the preset user A becomes the preset user in the selected state, only the first target media content of the preset user A is displayed. If the current user triggers the unselected state user identifier 301, the preset user A is changed to the preset user in the unselected state, and the user identifier of the preset user A is changed to the unselected state user identifier, and then the count of the unread target media contents displayed in association with the unselected state user identifier is 3 and the preset user C becomes the new preset user in the selected state.

In some embodiments, in the process of displaying the current target media content in the target display page, the method further includes: in response to the preset switching operation or complete play of the current target media content, displaying the targe media content next to the current target media content in the target display page, when at least one target media content is determined as being present after the current target media content posted by the preset user currently in the selected state. Thus, it is possible to support the continuous display of the target media content posted by a single preset user, and improve the viewing efficiency of media content. The preset switching operation may be, for example, a swipe-up operation or the like.

As shown in Fig. 3, if the current user inputs the swipe-up operation on the target display page, the second target media content of the four target media contents may be played.

In some embodiments, in the process of displaying the current target media content in the target display page, the method further includes, in response to the preset switching operation or complete play of the current target media content, displaying the target media content posted by a preset user next to the preset user currently in the selected state in the target display page, when no target media content is determined as being present after the current media content posted by the preset user currently in the selected state. Thus, the continuous display of target media contents posted by different preset users may be supported, and the viewing efficiency of media content may be further improved.

As shown in Fig. 3, if the current target media content is the fourth target media content of the preset user A, and the current user inputs a swipe-up operation in the target display page, the first target media content of the preset user B may be played.

In some embodiments, after displaying the first preset user identifier set in the first preset area of the target display page, the method further includes, in response to a first preset display change event being triggered, switching from displaying the first preset user identifier set in the first preset area of the target display page to displaying a second preset display page set in a second preset area of the target user identifier, where the second preset area is associated with the first preset area, and the second preset user identifier set includes an inactive state user identifier corresponding to the unselected state user identifier in the first preset user identifier set. Accordingly, the display mode of each user identifier may be flexibly controlled, and the user identifier of the preset user in the unselected state may be placed in triggerable state and non-triggerable state respectively by the different the display modes, thereby reducing mis-operation.

Exemplarily, the first preset display change event may be set according to the actual situation, and for example, it may be actively triggered by the user, or automatically triggered when compliance with the trigger condition is detected. Optionally, the first preset display change event being triggered includes, in the process of displaying the first preset user identifier set, a duration of not receiving a second preset gesture operation is greater than or equal to a preset duration threshold. Accordingly, it is possible to reduce user operations and provide convenience to the user.

Exemplarily, the second preset gesture operation may be the same as or different from the first preset gesture operation, and the second preset gesture operation may further include a trigger operation for triggering an unselected state user identifier. The preset duration threshold may be set according to actual needs, such as 5 seconds. For example, if the current user does not input the swipe operation in the first preset area within 5 seconds and does not trigger an unselected state user identifier, it may be determined that the first preset display change event is triggered. The association mode between the second preset area and the first preset area is not limited, and for example, the second preset area and the first preset area may be in the same area, or the second preset area may be included in the first preset area.

Optionally, the size of the second preset area is smaller than the size of the first preset area. Accordingly, in the case where the second preset user identifier set is displayed, the current user may view a more complete picture of the current target media content.

Exemplarily, the inactive state user identifier may be understood as the user identifier that currently does not support triggering, and the display style of the inactive state user identifier is different from the display style of the unselected state user identifier, and the difference may be embodied in, for example, the content of the user identifier, the size of the user identifier, whether the count of unread target media contents are displayed in association, whether associated information is displayed, the background color, the transparency, and the like. Optionally, the second preset user identifier set may also include a display state user identifier, and the display state user identifier may be understood as the user identifier displayed in the second preset area and in the selected state as the selected state user identifier displayed in the first preset area. The display style of the display state user identifier is different from the display style of the selected state user identifier, and the difference may be embodied in, for example, the content of the user identifier content, the size of the user identifier, whether the associated information is displayed in association, the background color, the transparency, and the like.

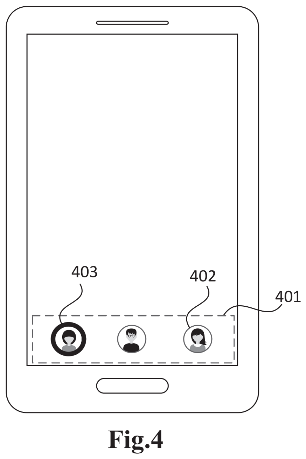

Fig. 4 is another interface diagram provided by the embodiment of the present disclosure. As shown in Fig. 4, the second preset user identifier set is displayed in the second preset area 401, and the size of the second preset area 401 is smaller than the size of the first preset area 202 as shown in Fig. 2. Compared with the unselected state user identifier 301 shown in Fig. 3, the size of the inactive state user identifier 402 is smaller and the inactive state user identifier 402 does not contain a user name. Compared with the selected state user identifier 303 shown in Fig. 3, the size of the display state user identifier 403 is smaller and the display state user identifier 403 is not displayed in association with the prompt information in playing, and the background colors are different, and the avatar border is bold.

In some embodiments, after displaying the second preset user identifier set in the second preset area of the target display page, the method further includes in response to the second preset display change event being triggered, switching from displaying the second preset user identifier set in the second preset area of the target display page to displaying the first preset user identifier set in the first preset area of the target display page. Accordingly, the display switching between the second preset user identifier set and the first preset user identifier set may be flexibly performed to satisfy different page content browsing requirements of the user.

Exemplarily, the second preset display change event may be actively triggered by the user, for example, by inputting a first preset gesture operation, such as a swipe operation, in the second preset area, and then it may switch to display the first preset user identifier set, so that the user identifier of the preset user in the unselected state is in triggerable state, to further switching the preset user in the selected state.

In some embodiments, in a process of displaying the first preset user identifier set in the first preset area of the target display page, a preset association element of a current target media content in the target display page is in a first state; in a process of displaying the second preset user identifier set in the second preset area of the target display page, a preset association element of the current target media content in the target display page is in a second state, where the first state and the second state are different. Accordingly, in the process of displaying different preset user identifier sets, the preset association elements of the current target media content are set to different states, forming linkage with the change of display style of the user identifier, enriching the experience of browsing page and further satisfying the browsing requirements of the user.

Optionally, the preset association element of the current target media content includes a preset control associated with the current target media content and/or preset associated information of the current target media content. Accordingly, the interference of the preset control and the preset associated information may be reduced in the process of switching the preset user in the selected state by the current user.

Exemplarily, the preset control may be, for example, a preset interactive control such as like control, comment control, and forwarding control, the first state may be in a disabled state, and the second state may be in a triggerable state. The preset associated information may include, for example, a work title, a work description, and the like, the first state may be a translucent state, and the second state may be an opaque state.

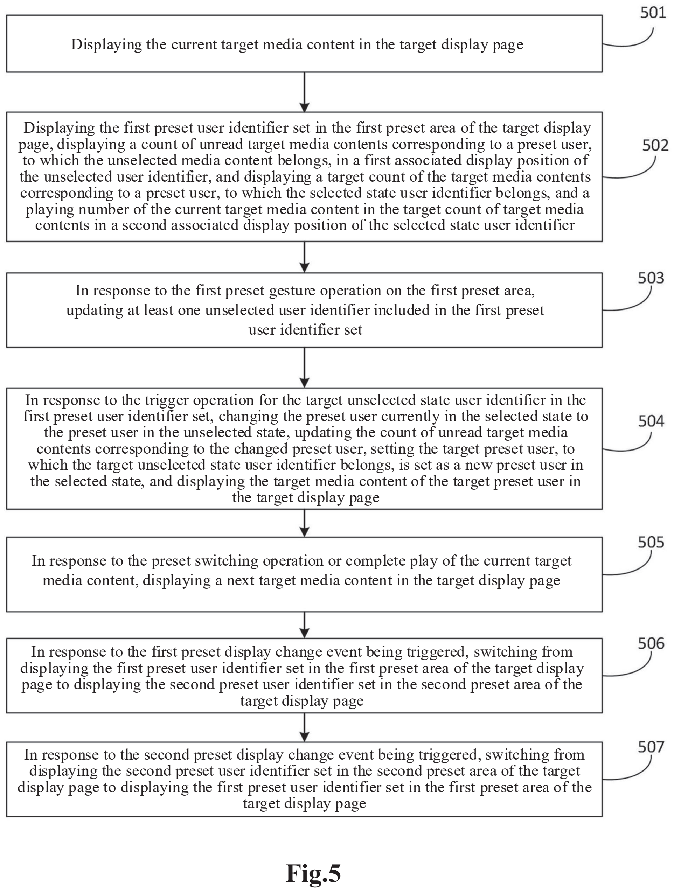

Fig. 5 is a schematic flow diagram of a method of media content displaying provided by an embodiment of the present disclosure. The embodiment of the present disclosure is optimized on the basis of each optional solution in the above embodiments, and specifically, the method includes the following steps:
step 501: displaying the current target media content in the target display page.

The current target media content is posted by the preset user in the selected state, the preset user in the selected state is contained in the preset user set, Preset users in the preset user set have preset association relationship with the current user, and the target media content includes a media work posted by the preset user and having not been displayed to the current user before entering the target display page.

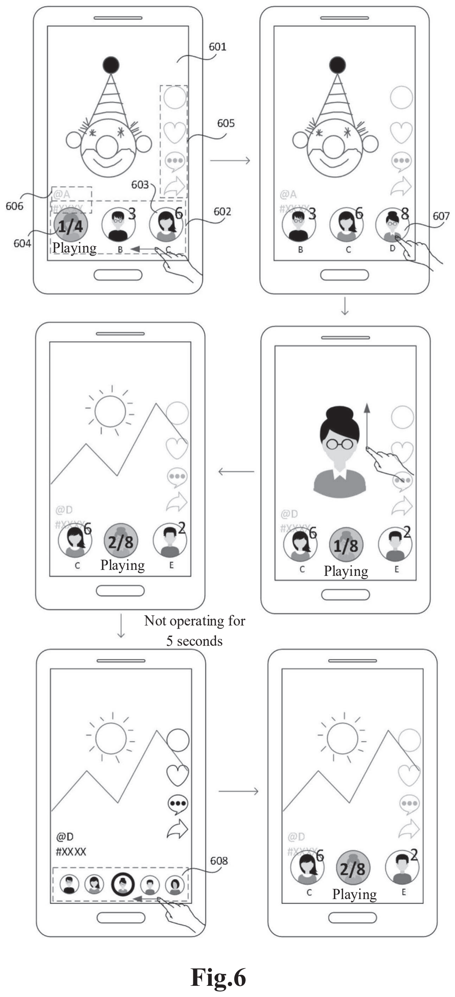

Fig. 6 is a schematic diagram of an interface interaction according to an embodiment of the present disclosure. As shown in Fig. 6, a first target media content, a clown video, posted by a preset user A is played in the target display page 601.

In step 502, displaying the first preset user identifier set in the first preset area of the target display page, displaying a count of unread target media contents corresponding to a preset user, to which the unselected user identifier belongs, in a first associated display position of the unselected state user identifier, and displaying a target count of the target media contents corresponding to a preset user to which the selected state user identifier belongs, and a playing number of the current target media content in the target count of target media contents in a second associated display position of the selected state user identifier.

The first preset user identifier set includes a selected state user identifier of the preset user in the selected state and at least one unselected state user identifier of a preset user in the unselected state, and the unselected state user identifier is configured for triggering change of the preset user currently in the selected state.

As shown in Fig. 6, the first preset user identifier set is displayed in the first preset area 602 of the target display page 601, and the first preset user identifier set includes an unselected state user identifier 603 and a selected state user identifier 604. Optionally, as shown in Fig. 6, the preset control 605 associated with the current target media content is in a disabled state, and the preset associated information 606 of the current target media content is in a translucent state.

In step 503, in response to the first preset gesture operation on the first preset area, updating at least one unselected state user identifier included in the first preset user identifier set.

As shown in Fig. 6, assuming that the current user inputs a left swipe operation in the first preset area 602, the avatar of the preset user A disappears, and an unselected state user identifier 607 of the preset user D appears.

In step 504, in response to the trigger operation for the target unselected state user identifier in the first preset user identifier set, changing the preset user currently in the selected state to the preset user in the unselected state, updating the count of unread target media contents corresponding to the changed preset user, setting the target preset user, to which the target unselected state user identifier belongs, as a new preset user in the selected state, and displaying the target media content posted by the target preset user in the target display page.

As shown in Fig. 6, assuming that the current user triggers the unselected state user identifier of the preset user D, the preset user A is changed to the preset user in the unselected state, the count of unread target media contents corresponding to the preset user A is updated to 3, the preset user D is set to a new preset user in the selected state, and the first target media content of the preset user D is displayed in the target display page 601.

Exemplarily, the selected state user identifier of the preset user in the selected state is displayed in preset position. Optionally, when the ranking of the preset user to which the target unselected state user identifier belongs in the preset user set is larger than the preset sequence number, the selected state user identifier of the new preset user in the selected state is displayed in the middle of the first preset area. As shown in Fig. 6, the selected state user identifier of the preset user D is located at an intermediate position in the first preset area.

In step 505, in response to the preset switching operation or complete play of the current target media content, displaying a next target media content in the target display page.

If a target media content posted by the preset user currently in the selected state is present after the current target media content, the next target media content is the next target media content posted by the preset user currently in the selected state. As shown in Fig. 6, when the current user inputs the swipe-up operation, the second target media content of the preset user D is played. If it is not present, the target media content posted by the next preset user is played. For example, assuming that it is currently the eighth target media content of the preset user D, the first target media content of the preset user E is played.

In step 506, in response to the first preset display change event being triggered, switching from displaying the first preset user identifier set in the first preset area of the target display page to displaying the second preset user identifier set in the second preset area of the target display page.

The second preset area is associated with the first preset area, and the size of the second preset area is smaller than the size of the first preset area, and the second preset user identifier set includes an inactive state user identifier corresponding to an unselected state user identifier in the first preset user identifier set, and a display state user identifier of the preset user in the selected state.

As shown in Fig. 6, if the current user has not input the swipe operation for 5 seconds and has not triggered the unselected state user identifier, the second preset area 608 may be switched to display the inactive state user identifier and the display state user identifier. The size of the user identifier in the second preset user identifier set is smaller than the size of the user identifier in the first preset user set, and more user identifiers may be displayed in the second preset area 608. In addition, the preset control associated with the current target media content is in a triggerable state, and the preset associated information of the current target media content is in an opaque state.

In step 507, in response to the second preset display change event being triggered, switching from displaying the second preset user identifier set in the second preset area of the target display page to displaying the first preset user identifier set in the first preset area of the target display page.

As shown in Fig. 6, if the current user wants to re-switch the preset user in the selected state, the swipe operation may be input in the second preset area, the displaying the first preset user identifier set may be restored, and then the trigger operation may be performed on the unselected state user identifier.

In the method of media content displaying provided by the embodiment of the present disclosure, a media work posted by a preset user associated with the current user and having not been displayed to the current user is displayed in a target display page, and the user identifier of other preset users are displayed, so that the user may change the author of the displayed media work by triggering the user identifier, and thus may conveniently view the newly posted works of each preset user. When the preset user is in the selected state, the user identifier may display the play progress of the target media content in association. When the preset user is in the unselected state, the user identifier may display the count of the unread media contents in association, to help the user fully understand the count information of the target media contents. When the target media contents posted by the preset user is completely played, the target media content of the next preset user may be played, to reduce steps of operation, which is convenient for the user, and when the preset operation is not received, the user identifier is automatically decreased in size and is changed to be in a disabled state, to reduce mis-operation, and enable more comprehensive browsing of media content, effectively improving user experience.

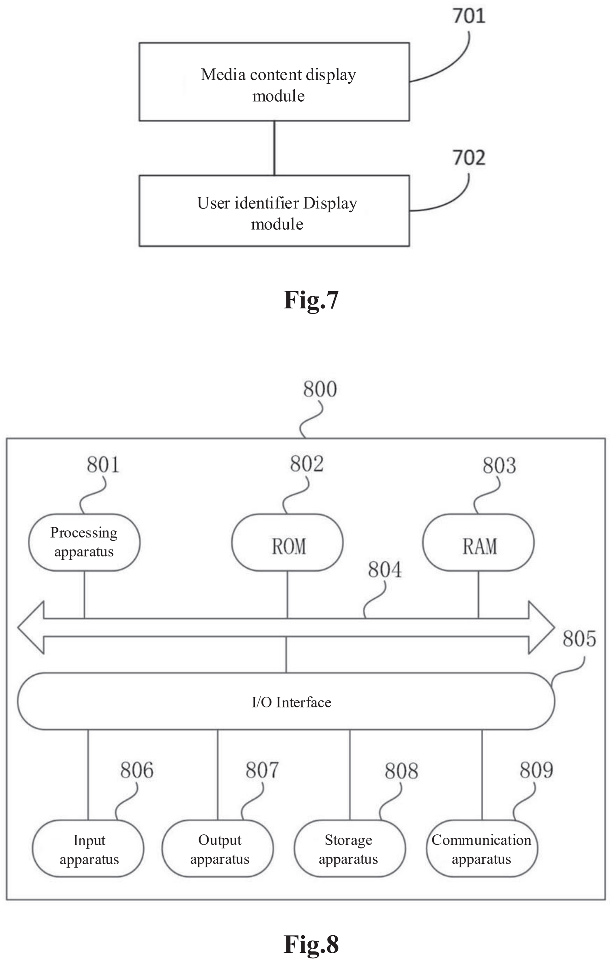

Fig. 7 is a schematic structural diagram of an apparatus of media content displaying according to an embodiment of the present disclosure. As shown in Fig. 7, the apparatus includes:

a media content display module 701, configured to display a current target media content in a target display page, where the current target media content is posted by a preset user in a selected state, the preset user in the selected state includes a preset user having a user identifier in the selected state, the preset user in the selected state is contained in a preset user set, preset users in the preset user set have a preset association relationship with a current user, and the target media content includes a media work posted by the preset user and having not been displayed to the current user before entering the target display page; and
a user identifier display module 702, configured to display a first preset user identifier set in a first preset area of the target display page, where the first preset user identifier set includes at least one unselected state user identifier of a preset user in an unselected state in the preset user set, the unselected state user identifier is configured to trigger a change of the preset user currently in the selected state, and the preset user in the unselected state includes the preset user having a user identifier in the unselected state.

According to the technical solution provided by the embodiment of the present disclosure, the media work posted by a preset user associated with the current user and having not been displayed to the current user is displayed in the target display page, and the user identifier of other preset users are displayed, so that the user may change the author of the displayed media work by triggering the user identifier, and further may conveniently view the newly posted works of each preset user, to improve user experience.

Optionally, the apparatus further includes:
an identifier update module, configured to, after displaying the first preset user identifier set in the first preset area of the target display page, in response to a first preset gesture operation on the first preset area, update the at least one unselected state user identifier contained in the first preset user identifier set.

Optionally, the first preset gesture operation includes a swipe gesture operation.

Optionally, the apparatus further includes:
a user setting module, configured to, after displaying the first preset user identifier set in the first preset area of the target display page, in response to a trigger operation for a target unselected state user identifier in the first preset user identifier set, set a target preset user, to which the target unselected state user identifier belongs, as a new preset user in the selected state;
a first content display module, configured to display the target media content posted by the target preset user in the target display page.

Optionally, the apparatus further includes:
a count display module, configured to display a count of unread target media contents corresponding to the preset user, to which the unselected state user identifier belongs, in a first associated display position of the unselected state user identifier.

Optionally, the first preset user identifier set further includes a selected state user identifier of the preset user in the selected state.

Optionally, the apparatus further includes:
a play progress display module, configured to display a target count of the target media contents corresponding to the preset user, to which the selected state user identifier belongs, and/or a playing number of the current target media content in the target count of the target media contents in a second associated display position of the selected state user identifier.

Optionally, the unselected state user identifier is displayed in association with a count of unread target media contents corresponding to the preset user, to which the unselected state user identifier belongs. The apparatus further includes a count update module, configured to, before setting the target preset user, to which the target unselected state user identifier belongs, as a new preset user in the selected state, change the preset user currently in the selected state to the preset user in the unselected state, and update the count of unread target media contents corresponding to the changed preset user.

Optionally, the apparatus further includes:
a second content display module, configured to, in a process of displaying the current target media content in the target display page, in response to a preset switching operation or complete play of the current target media content, display a target media content next to the current target media content in the target display page, when at least one target media content is determined as being presenting after the current target media content posted by the preset user currently in the selected state .

Optionally, the apparatus further includes:
a third content display module, configured to, in the process of displaying the current target media content in the target display page, in response to the preset switching operation or complete play of the current target media content, display the target media content posted by a preset user next to the preset user currently in the selected state in the target display page, when no target media content is determined as being present after the current media content posted by the preset user currently in the selected state.

Optionally, the apparatus further includes:
a first set switching module, configured to, after displaying the first preset user identifier set in the first preset area of the target display page, in response to a first preset display change event being triggered, switch from displaying the first preset user identifier set in the first preset area of the target display page to displaying a second preset display page set in a second preset area of the target user identifier, where the second preset area is associated with the first preset area, and the second preset user identifier set includes an inactive state user identifier corresponding to the unselected state user identifier in the first preset user identifier set.

Optionally, the first preset display change event being triggered includes, in a process of displaying the first preset user identifier set, a duration of not receiving a second preset gesture operation is greater than or equal to a preset duration threshold.

Optionally, the apparatus further includes:
a second set switching module, configured to, after displaying the second preset user identifier set in the second preset area of the target display page, in response to a second preset display change event being triggered, switch from displaying the second preset user identifier set in the second preset area of the target display page to displaying the first preset display page set in the first preset area of the target user identifier.

Optionally, a size of the second preset area is less than a size of the first preset area.

Optionally, in a process of displaying the first preset user identifier set in the first preset area of the target display page, a preset association element of the current target media content in the target display page is in a first state; in a process of displaying the second preset user identifier set in the second preset area of the target display page, a preset association element of the current target media content in the target display page is in a second state; where the first state and the second state are different.

Optionally, the preset association element of the current target media content includes a preset control associated with the current target media content and/or preset associated information of the current target media content.

The apparatus of media content displaying provided by the embodiment of the present disclosure may execute the method of media content displaying provided by any embodiment of the present disclosure and has functional modules and beneficial effects corresponding to executing the method.

It should be noted that each unit and module included in the above-described apparatus only be divided according to the functional logic but is not limited to the above-described division, provided that the corresponding functions may be implemented. In addition, the specific name of each functional unit is only for convenience of mutual distinction and are not used to limit the scope of protection of the embodiments of the present disclosure.

Fig. 8 is a schematic structural diagram of an electronic device according to an embodiment of the present disclosure. Referring to Fig. 8, Fig. 8 illustrates a schematic structural diagram of an electronic device (for example, the terminal device or server in Fig.8) 800 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 8 is merely an example and should not pose any limitation to the functions and the range of use of the embodiments of the present disclosure.

As illustrated in Fig. 8, the electronic device 800 may include a processing apparatus 801 (e.g., a central processing unit, a graphics processing unit, etc.), which can perform various suitable actions and processing according to a program stored in a read-only memory (ROM) 802 or a program loaded from a storage apparatus 808 into a random-access memory (RAM) 803. The RAM 803 further stores various programs and data required for operations of the electronic device 800. The processing apparatus 801, the ROM 802, and the RAM 803 are interconnected by means of a bus 804. An input/output (I/O) interface 805 is also connected to the bus 804.

Usually, the following apparatus may be connected to the I/O interface 805: an input apparatus 806 including, for example, a touch screen, a touch pad, a keyboard, a mouse, a camera, a microphone, an accelerometer, a gyroscope, or the like; an output apparatus 807 including, for example, a liquid crystal display (LCD), a loudspeaker, a vibrator, or the like; a storage apparatus 808 including, for example, a magnetic tape, a hard disk, or the like; and a communication apparatus 809. The communication apparatus 809 may allow the electronic device 800 to be in wireless or wired communication with other devices to exchange data. While Fig. 8 illustrates the electronic device 800 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 809 and installed, or may be installed from the storage apparatus 808, or may be installed from the ROM 802. When the computer program is executed by the processing apparatus 801, the above-mentioned functions defined in the methods of some embodiments of the present disclosure are performed.

The names of messages or information interacted between multiple apparatuses in embodiments of the present disclosure are for illustrative purposes only and are not intended to limit the scope of these messages or information.

The electronic device provided by the embodiment of the present disclosure and the method of media content displaying provided by the above embodiment belong to the same inventive concept, and the technical details not described in detail in the present embodiment may be referred to the above embodiment, and the present embodiment has the same beneficial effects as the above embodiment.

Embodiments of the present disclosure provide a computer storage medium storing computer program thereon, and when the program is executed by the processor, the method of media content displaying provided by the above embodiment is implemented.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The computer-readable medium carries one or more programs that, when executed by the electronic device, cause the electronic device to: display a current target media content in a target display page, where the current target media content is posted by a preset user in a selected state, the preset user in the selected state includes a preset user having a user identifier in a selected state, the preset user in the selected state is contained in a preset user set, preset users in the preset user set have a preset association relationship with a current user, and target media contents includes a media work posted by the preset user and having not been displayed to the current user before entering the target display page; display a first preset user identifier set in a first preset area of the target display page, where the first preset user identifier set includes at least one unselected state user identifier of a preset user in an unselected state in the preset user set, the unselected state user identifier is configured to trigger a change of the preset user currently in the selected state.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of the module or unit does not constitute a limitation of the unit itself under certain circumstances. For example, the user identifier display module may also be described as "a module, configured to display a first preset user identifier set in a first preset area of the target display page, where the first preset user identifier set includes at least one unselected state user identifier of a preset user in an unselected state in the preset user set, and the unselected state user identifier is configured to trigger a change of the preset user currently in the selected state."

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, a method of media content displaying is provided, and the method includes:
displaying a current target media content in a target display page, where the current target media content is posted by a preset user in a selected state, the preset user in the selected state includes a preset user having a user identifier in a selected state, the preset user in the selected state is contained in a preset user set, preset users in the preset user set have a preset association relationship with a current user, and target media contents includes a media work posted by the preset user and having not been displayed to the current user before entering the target display page; and
displaying a first preset user identifier set in a first preset area of the target display page, where the first preset user identifier set includes at least one unselected state user identifier of a preset user in an unselected state in the preset user set, the unselected state user identifier is configured to trigger a change of the preset user currently in the selected state, and the preset user in the unselected state includes a preset user having a user identifier in the unselected state.

According to one or more embodiments of the present disclosure, after displaying the first preset user identifier set in the first preset area of the target display page, the method further includes:
in response to a first preset gesture operation on the first preset area, updating the at least one unselected state user identifier contained in the first preset user identifier set.

According to one or more embodiments of the present disclosure, the first preset gesture operation includes a swipe gesture operation.

According to one or more embodiments of the present disclosure, after displaying the first preset user identifier set in the first preset area of the target display page, the method further includes:
in response to a trigger operation for a target unselected state user identifier in the first preset user identifier set, setting a target preset user, to which the target unselected state user identifier belongs, as a new preset user in the selected state; and
displaying the target media content posted by the target preset user in the target display page.

According to one or more embodiments of the present disclosure, the method further includes:
displaying a count of unread target media contents corresponding to the preset user, to which the unselected state user identifier belongs, in a first associated display position of the unselected state user identifier.

According to one or more embodiments of the present disclosure, the first preset user identifier set further includes a selected state user identifier of the preset user in the selected state.

According to one or more embodiments of the present disclosure, the method further includes:
displaying a target count of the target media contents corresponding to the preset user, to which the selected state user identifier belongs, and/or a playing number of the current target media content in the target count of the target media contents in a second associated display position of the selected state user identifier.

According to one or more embodiments of the present disclosure, the unselected state user identifier is displayed in association with a count of unread target media contents corresponding to the preset user, to which the unselected state user identifier belongs; where before setting the target preset user, to which the target unselected state user identifier belongs, as a new preset user in the selected state, the method further includes:
changing the preset user currently in the selected state to the preset user in the unselected state, and updating the count of unread target media contents corresponding to the changed preset user.

According to one or more embodiments of the present disclosure, in a process of displaying the current target media content in the target display page, the method further includes:
in response to a preset switching operation or complete play of the current target media content, displaying the targe media content next to the current target media content in the target display page, when at least one target media content is determined as being present after the current target media content posted by the preset user currently in the selected state.

According to one or more embodiments of the present disclosure, in the process of displaying the current target media content in the target display page, the method further includes:
in response to the preset switching operation or complete play of the current target media content, displaying the target media content posted by a preset user next to the preset user currently in the selected state in the target display page, when no target media content is determined as being present after the current media content posted by the preset user currently in the selected state.

According to one or more embodiments of the present disclosure, after displaying the first preset user identifier set in the first preset area of the target display page, the method further includes:
in response to a first preset display change event being triggered, switching from displaying the first preset user identifier set in the first preset area of the target display page to displaying a second preset display page set in a second preset area of the target user identifier, where the second preset area is associated with the first preset area, and the second preset user identifier set includes an inactive state user identifier corresponding to the unselected state user identifier in the first preset user identifier set.

According to one or more embodiments of the present disclosure, the first preset display change event being triggered includes: in a process of displaying the first preset user identifier set, a duration of not receiving a second preset gesture operation is greater than or equal to a preset duration threshold.

According to one or more embodiments of the present disclosure, after displaying the second preset user identifier set in the second preset area of the target display page, the method further includes:
in response to a second preset display change event being triggered, switching from displaying the second preset user identifier set in the second preset area of the target display page to displaying the first preset display page set in the first preset area of the target user identifier.

According to one or more embodiments of the present disclosure, a size of the second preset area is less than a size of the first preset area.

According to one or more embodiments of the present disclosure, in a process of displaying the first preset user identifier set in the first preset area of the target display page, a preset association element of the current target media content in the target display page is in a first state; in a process of displaying the second preset user identifier set in the second preset area of the target display page, a preset association element of the current target media content in the target display page is in a second state; where the first state and the second state are different.

According to one or more embodiments of the present disclosure, the preset association element of the current target media content includes a preset control associated with the current target media content and/or preset associated information of the current target media content.

According to one or more embodiments of the present disclosure, an apparatus of media content displaying is provided. The apparatus includes:
a media content display module, configured to display a current target media content in a target display page, where the current target media content is posted by a preset user in a selected state, the preset user in the selected state includes a preset user having a user identifier in a selected state, the preset user in the selected state is contained in a preset user set, preset users in the preset user set have a preset association relationship with a current user, and target media contents includes a media work posted by the preset user and having not been displayed to the current user before entering the target display page; and
a user identifier display module, configured to display a first preset user identifier set in a first preset area of the target display page, where the first preset user identifier set includes at least one unselected state user identifier of a preset user in an unselected state in the preset user set, the unselected state user identifier is configured to trigger a change of the preset user currently in the selected state, and the preset user in the unselected state includes a preset user having a user identifier in the unselected state.

According to one or more embodiments of the present disclosure, an electronic device is provided. The electronic device includes:
one or more processors;
a storage apparatus for storing one or more programs,
when the one or more programs are executed by the one or more processor, the one or more processor implements the method of media content displaying provided by an embodiment of the present disclosure.

According to one or more embodiments of the present disclosure, a storage medium including computer-executable instructions is provided. The computer-executable instructions, when executed by a computer processor, are configured to perform a method of media content displaying provided by an embodiment of the present disclosure.

The foregoing descriptions are merely preferred embodiments of the present disclosure and explanations of the applied technical principles. Persons skilled in the art should understand that the scope of disclosure involved in the present disclosure is not limited to the technical solutions formed by a specific combination of the foregoing technical features, and shall also cover other technical solutions formed by any combination of the foregoing technical features or equivalent features thereof without departing from the foregoing concept of disclosure, for example, the technical solutions formed by replacing the foregoing features with technical features with similar functions disclosed in the present disclosure (but not limited thereto).

In addition, although the various operations are depicted in a specific order, it should be understood as requiring these operations to be performed in the specific order shown or in a sequential order. Under specific circumstances, multitasking and parallel processing may be advantageous. Similarly, although several specific implementation details are included in the foregoing discussions, these details should not be construed as limiting the scope of the present disclosure. Some features that are described in the context of separate embodiments also may be implemented in combination in a single embodiment. In contrast, various features described in a single embodiment also may be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A method of media content displaying, comprising:
displaying a current target media content in a target display page, wherein the current target media content is posted by a preset user in a selected state, the preset user in the selected state comprises a preset user having a user identifier in a selected state, the preset user in the selected state is contained in a preset user set, preset users in the preset user set have a preset association relationship with a current user, and target media contents comprises a media work posted by the preset user and having not been displayed to the current user before entering the target display page; and
displaying a first preset user identifier set in a first preset area of the target display page, wherein the first preset user identifier set comprises at least one unselected state user identifier of a preset user in an unselected state in the preset user set, the unselected state user identifier is configured to trigger a change of the preset user currently in the selected state, and the preset user in the unselected state comprises a preset user having a user identifier in the unselected state.

2. The method of claim 1, wherein after displaying the first preset user identifier set in the first preset area of the target display page, the method further comprises:
in response to a first preset gesture operation on the first preset area, updating the at least one unselected state user identifier contained in the first preset user identifier set.

3. The method of claim 2, wherein the first preset gesture operation comprises a swipe gesture operation.

4. The method of claim 1, wherein after displaying the first preset user identifier set in the first preset area of the target display page, the method further comprises:
in response to a trigger operation for a target unselected state user identifier in the first preset user identifier set, setting a target preset user, to which the target unselected state user identifier belongs, as a new preset user in the selected state; and
displaying the target media content posted by the target preset user in the target display page.

5. The method of claim 1, further comprising:
displaying a count of unread target media contents corresponding to the preset user, to which the unselected state user identifier belongs, in a first associated display position of the unselected state user identifier.

6. The method of claim 1, wherein the first preset user identifier set further comprises a selected state user identifier of the preset user in the selected state.

7. The method of claim 6, further comprising:
in a second associated display position of the selected state user identifier, displaying a target count of the target media contents corresponding to the preset user to which the selected state user identifier belongs, and/or a playing number of the current target media content in the target count of the target media contents.

8. The method of claim 3, wherein the unselected state user identifier is displayed in association with a count of unread target media contents corresponding to the preset user to which the unselected state user identifier belongs; wherein, before setting the target preset user, to which the target unselected state user identifier belongs, as a new preset user in the selected state, the method further comprises:
changing the preset user currently in the selected state to the preset user in the unselected state, and updating the count of unread target media contents corresponding to the changed preset user.

9. The method of claim 1, wherein in a process of displaying the current target media content in the target display page, the method further comprises:
in response to a preset switching operation or complete play of the current target media content, displaying the targe media content next to the current target media content in the target display page, when at least one target media content is determined as being present after the current target media content posted by the preset user currently in the selected state.

10. The method of claim 9, wherein in the process of displaying the current target media content in the target display page, the method further comprises:
in response to the preset switching operation or complete play of the current target media content, displaying the target media content posted by a preset user next to the preset user currently in the selected state in the target display page, when no target media content is determined as being present after the current media content posted by the preset user currently in the selected state.

11. The method of claim 1, wherein after displaying the first preset user identifier set in the first preset area of the target display page, the method further comprises:
in response to a first preset display change event being triggered, switching from displaying the first preset user identifier set in the first preset area of the target display page to displaying a second preset display page set in a second preset area of the target user identifier, wherein the second preset area is associated with the first preset area, and the second preset user identifier set comprises an inactive state user identifier corresponding to the unselected state user identifier in the first preset user identifier set.

12. The method of claim 11, wherein the first preset display change event being triggered comprises: in a process of displaying the first preset user identifier set, a duration of not receiving a second preset gesture operation is greater than or equal to a preset duration threshold.

13. The method of claim 11, wherein after displaying the second preset user identifier set in the second preset area of the target display page, the method further comprises:
in response to a second preset display change event being triggered, switching from displaying the second preset user identifier set in the second preset area of the target display page to displaying the first preset display page set in the first preset area of the target user identifier.

14. The method of claim 11, wherein a size of the second preset area is less than a size of the first preset area.

15. The method of claim 11, wherein, in a process of displaying the first preset user identifier set in the first preset area of the target display page, a preset association element of the current target media content in the target display page is in a first state; in a process of displaying the second preset user identifier set in the second preset area of the target display page, a preset association element of the current target media content in the target display page is in a second state; wherein the first state and the second state are different.

16. The method of claim 15, wherein the preset association element of the current target media content comprises a preset control associated with the current target media content and/or preset associated information of the current target media content.

17. An apparatus of media content displaying, comprising:
a media content display module, configured to display a current target media content in a target display page, wherein the current target media content is posted by a preset user in a selected state, the preset user in the selected state comprises a preset user having a user identifier in a selected state, the preset user in the selected state is contained in a preset user set, preset users in the preset user set have a preset association relationship with a current user, and target media contents comprises a media work posted by the preset user and having not been displayed to the current user before entering the target display page; and
a user identifier display module, configured to display a first preset user identifier set in a first preset area of the target display page, wherein the first preset user identifier set comprises at least one unselected state user identifier of a preset user in an unselected state in the preset user set, the unselected state user identifier is configured to trigger a change of the preset user currently in the selected state, and the preset user in the unselected state comprises a preset user having a user identifier in the unselected state.

18. The apparatus of claim 17, further comprising a module for performing the method of any one of claims 2-16.

19. An electronic device, comprising:
one or more processors;
a storage apparatus, configured to store one or more programs,
when the one or more programs are executed by the one or more processor, the one or more processors are caused to implement the method of media content displaying of any one of claims 1-16.

20. A storage medium comprising computer-executable instructions, wherein the computer-executable instructions, when executed by a computer processor, are configured to perform the method of media content displaying of any one of claims 1-16.
